# EUROPÄISCHE PATENTSCHRIFT

(11) **EP 2 798 993 B1**
(45) Veröffentlichungstag und Bekanntmachung des Hinweises auf die Patenterteilung: **16.11.2016**
(21) Anmeldenummer: 14165075.4
(22) Anmeldetag: 17.04.2014
(51) Int. Cl.: A47L 15/00, A47L 15/42

(54) **Verfahren zur Durchführung eines Spülprogramms**
Device for performing a flushing programme
Procédé destiné à l'exécution d'un programme de rinçage

(30) Priorität: 29.04.2013 DE 102013104336; 29.04.2013 DE 102013104332
(43) Veröffentlichungstag der Anmeldung: 05.11.2014
(73) Patentinhaber: Miele & Cie. KG, 33332 Gütersloh (DE)
(72) Erfinder: Haas, Andreas, 33689 Bielefeld (DE); Kara, Carcus, 49152 Bad Essen (DE)

(56) Entgegenhaltungen:
- EP-A1- 1 219 228
- EP-A1- 1 669 017
- EP-A2- 1 029 496
- EP-A2- 1 362 545
- DE-A1- 19 951 839

## Beschreibung

Die Erfindung betrifft ein Verfahren zur Durchführung eines Spülprogramms in einem Spülautomaten, bei dem eine Umwälzpumpe Spülflüssigkeit zu mindestens einem rotierenden Sprüharm fördert, mittels dem das zu reinigende Spülgut mit der Spülflüssigkeit beaufschlagt wird, wobei das Spülprogramm eine Impulsspülphase aufweist, in der sich Normalbetriebsabschnitte, in denen die Umwälzpumpe mit einer Nenndrehzahl betrieben wird, mit Impulsbetriebsabschnitten, in denen die Umwälzpumpe mit einer gegenüber der Nenndrehzahl erhöhten Drehzahl betrieben wird, mehrfach abwechseln.

Ein solches Verfahren ist aus der DE 199 51 839 A1 bekannt. Darin wird die Umwälzpumpe zeitweilig mit einer höheren und einer niedrigeren Drehzahl alternierend betrieben. Bei den Impulsbetriebsabschnitten, in denen die Umwälzpumpe mit der höheren Drehzahl betrieben wird, handelt es sich allerdings lediglich um vergleichsweise kurzzeitige Druckspitzen. Das Spülgut wird insgesamt nur in vergleichsweise geringem Maß durch Spülflüssigkeit mit erhöhtem Druck beaufschlagt.

Die EP 1669017 A1 offenbart ein Verfahren, bei dem die Umwälzpumpe mit einer höheren und einer niedrigeren Drehzahl sowie mit einer dazwischen liegenden mittleren Drehzahl alternierend betrieben wird.

Aus der EP 1362545 A2 ist ein Verfahren bekannt, bei dem in einem Programmschnitt mit kalter Spülflüssigkeit das Umwälzen der Spülflüssigkeit durch wiederholtes Ein- und Ausschalten der Umwälzpumpe unterbrochen wird, wobei Anzahl und Dauer der Ein- und Ausschaltvorgänge so ausgelegt sind, dass der Sprüharm in dem Programmabschnitt zumindest annähernd einmal vollständig um seine Rotationsachse gedreht wird.

Der Erfindung stellt sich das Problem, ein verbessertes Verfahren zum Betreiben einer Haushaltsvorrichtung bereitzustellen, bei dem die Reinigungsleistung bei gleichem oder verringertem Wasser- und/oder Energieverbrauch verbessert oder der Wasser- und/oder Energieverbrauch bei gleicher oder verbesserter Reinigungsleistung verringert wird.

Erfindungsgemäß wird dieses Problem durch das Verfahren mit den Merkmalen des Patentanspruchs 1 gelöst. Vorteilhafte Ausgestaltungen und Weiterbildungen der Erfindung ergeben sich aus den abhängigen Ansprüchen.

Bei dem erfindungsgemäßen Verfahren zur Durchführung eines Spülprogramms in einem Spülautomaten, fördert eine Umwälzpumpe Spülflüssigkeit zu mindestens einem rotierenden Sprüharm. Hierdurch wird das zu reinigende Spülgut mit der Spülflüssigkeit beaufschlagt. Das Spülprogramm weist dabei zumindest eine Impulsspülphase auf, in der sich Normalbetriebsabschnitte, in denen die Umwälzpumpe mit einer insbesondere vorgegebenen oder vorgebbaren Nenndrehzahl betrieben wird, mit Impulsbetriebsabschnitten, in denen die Umwälzpumpe mit einer gegenüber der Nenndrehzahl erhöhten Drehzahl betrieben wird, mehrfach abwechseln. Die Umwälzpumpe wird während der Impulsspülphase also so gesteuert, dass ihre Drehzahl zwischen einer Nenndrehzahl und einer erhöhten Impulsspüldrehzahl wechselt. Dabei ist die Umwälzpumpe kontinuierlich im Betrieb, d.h. sie wird während der Impulsspülphase nicht ausgeschaltet.

Die Nenndrehzahl ist dabei eine für die in den Spülautomaten eingelassene Wassermenge ausgelegte Drehzahl, bei deren dauerhafter Einstellung ein stabiler Betrieb der Umwälzpumpe gewährleistet wäre.

Die erhöhte Drehzahl eines Impulsbetriebsabschnittes liegt deutlich über der Nenndrehzahl und ist insbesondere deutlich zu hoch, als dass bei dauerhafter konstanter Einstellung dieser Drehzahl ein stabiler Betrieb der Umwälzpumpe gewährleistet wäre. Jedoch ist die Zeitdauer eines Impulsbetriebsabschnittes zwar einerseits so lang, dass der Sprüharm in einem Impulsbetriebsabschnitt zumindest eine volle Umdrehung ausführt, aber andererseits in jedem Fall auch hinreichend kurz, so dass die ausreichende Versorgung der Umwälzpumpe während dieses Impulsbetriebsabschnittes und insbesondere während der gesamten Impulsspülphase sichergestellt bleibt.

Vorzugsweise wird die Umwälzpumpe im Anschluss an einen Normalbetriebsabschnitt zunächst auf eine gegenüber der Nenndrehzahl abgesenkte Drehzahl abgebremst, bevor sie auf die erhöhte Drehzahl des Impulsbetriebsabschnitts beschleunigt wird. Demgemäß wechselt die Drehzahl der Umwälzpumpe nicht ständig zwischen lediglich zwei sondern zwischen drei Drehzahlniveaus. Ein Normalbetriebsabschnitt wird somit zunächst von einem Abbremsabschnitt abgelöst, in der die Drehzahl der Umwälzpumpe auf eine gegenüber der Nenndrehzahl abgesenkte Drehzahl, verringert wird. Die Drehzahl wird dabei vorzugsweise um zumindest 5%, insbesondere um 5% bis 15%, gegenüber der Nenndrehzahl abgesenkt. Erst im Anschluss an den Abbremsabschnitt folgt ein Impulsbetriebsabschnitt nach. In periodischer Weise schließt sich daran wiederum ein Normalbetriebsabschnitt an, der wiederum von einem Abbremsabschnitt abgelöst wird mit gegenüber der Nenndrehzahl abgesenkter Drehzahl, gefolgt von einem weiteren Impulsbetriebsabschnitt usw. Jedem Impulsbetriebsabschnitt geht somit ein Abbremsabschnitt voran. In Folge der kurzzeitigen Verringerung der Drehzahl im Abbremsabschnitt steht vorübergehend im Ansaugbereich der Umwälzpumpe eine größere Menge Spülflüssigkeit zur Verfügung, so dass der nachfolgende Impulsbetriebsabschnitt sich über einen vergleichsweise langen Zeitraum erstrecken kann, ohne dass der Druck einbricht. Hierdurch kann das Spülgut mit einem vergleichsweise lang anhaltenden und besonders druckvollen Sprühstoß beaufschlagt werden, womit insbesondere stark anhaftende Schmutzpartikel wirkungsvoll abgelöst und das Reinigungsergebnis insgesamt erheblich verbessert werden kann.

Erfindungsgemäß ist vorgesehen, dass die Zeitdauer von Impulsbetriebsabschnitten, also solcher Abschnitte, in denen die Umwälzpumpe mit einer gegenüber der Nenndrehzahl erhöhten Drehzahl betrieben wird, jeweils so bemessen ist, dass der Sprüharm in einem Impulsbetriebsabschnitt zumindest eine volle Umdrehung ausführt, bevor die Drehzahl wieder auf die Nenndrehzahl abgesenkt wird, d.h. bevor jeweilige Impulsbetriebsabschnitt endet und ein nachfolgender Normalbetriebsabschnitt beginnt. Dies gilt vorzugsweise für alle oder weitgehend alle Impulsbetriebsabschnitte in der Impulsspülphase. Im Vergleich zum Stand der Technik haben Impulsbetriebsabschnitte somit eine längere Zeitdauer. Durch die erfindungsgemäße Ausgestaltung wird eine homogenere Beaufschlagung des Spülgutes mit erhöhtem Spüldruck erreicht. Damit ist erfindungsgemäß sichergestellt, dass jedes Spülgut im Spülraum, welches von aus dem Sprüharm heraustretender Spülflüssigkeit erreichbar ist, während eines Impulsbetriebsabschnittes auch tatsächlich erreicht wird. Auf diese Weise kann ein verbessertes Spülergebnis erzielt werden.

Die besten Ergebnisse hinsichtlich Reinigungsergebnis und Energieeffizienz werden erreicht, wenn die Nenndrehzahl in Normalbetriebsabschnitten und die erhöhte Drehzahl der Umwälzpumpe in Impulsbetriebsabschnitten so gewählt sind, dass Letztere gegenüber der Nenndrehzahl um 10 bis 35% erhöht ist.

Vorzugweise weisen die Impulsbetriebsabschnitte in der Impulsspülphase einen zeitlichen Anteil von 25 bis 50 % auf, das bedeutet, die innerhalb einer Impulsspülphase durchlaufenen Impulsbetriebsabschnitte, die sich mit den Normalbetriebsabschnitten und den Abbremsabschnitten abwechseln, haben aufsummiert eine Zeitdauer, welche 25 bis 50 % der Gesamtdauer der Impulsspülphase entspricht. Besonders vorgezogen ist ein Anteil der Impulsbetriebsabschnitte an der Gesamtdauer der Impulsspülphase von 35 bis 40 %. Somit wird während einer nicht unerheblichen Zeitdauer innerhalb der Impulsspülphase ein erhöhter Spüldruck bereitgestellt, obwohl die für den Umwälzbetrieb zur Verfügung stehende Wassermenge für einen Betrieb der Umwälzpumpe mit niedrigerer Drehzahl ausgelegt ist. Dadurch ist eine vergleichsweise hohe Reinigungsleistung bei einem vergleichsweise geringen Wasserverbrauch möglich.

Während der Impulsspülphase wechseln sich Normalbetriebsabschnitte, Impulsbetriebsabschnitte und Abbremsabschnitte vielfach, insbesondere periodisch ab. Die Periodendauer liegt dabei typischerweise zwischen 2 und 10 Sekunden, vorzugsweise zwischen 3 und 7 Sekunden.

Ein Spülprogramm nach dem erfindungsgemäßen Verfahren weist in an sich bekannter Weise mehrere Spülprogrammabschnitte, insbesondere zumindest die Spülprogrammabschnitte REINIGEN und KLARSPÜLEN auf. Zwischen den beiden Spülprogrammabschnitten REINIGEN und KLARSPÜLEN findet typischerweise ein Spülprogrammabschnitt ZWISCHENSPÜLEN statt. Vor dem Spülprogrammabschnitt REINIGEN kann darüber hinaus ein Spülprogrammabschnitt VORSPÜLEN vorgesehen sein. Nach dem Spülprogrammabschnitt KLARSPÜLEN folgt außerdem typischerweise ein Spülprogrammabschnitt TROCKNEN.

In den Spülprogrammabschnitten REINIGEN und KLARSPÜLEN wird typischerweise in ebenfalls an sich bekannter Weise die umgewälzte Spülflüssigkeit durch eine Heizeinrichtung erhitzt. Dabei weisen die beiden Spülprogrammabschnitte jeweils einen ersten Abschnitt auf, der als Aufheizzeit, und einen zweiten Abschnitt, der als Haltezeit bezeichnet werden kann. In der Aufheizzeit wird die umgewälzte Spülflüssigkeit, nachdem eine für den Betrieb der Heizeinrichtung ausreichende Menge an Frischwasser dem Spülautomaten zugeführt wurde, während des Spülbetriebs durch die eingeschaltete Heizeinrichtung erhitzt. Am Ende der Aufheizzeit wird die Heizeinrichtung ausgeschaltet, womit die Haltezeit beginnt, in der der Spülbetrieb bei ausgeschalteter Heizeinrichtung bis zum Ende des Spülprogrammabschnittes fortgesetzt wird, wobei die Temperatur der Spülflotte nach und nach abfällt.

Vorzugsweise findet eine Impulsspülphase in einem Spülprogrammabschnitt mit erwärmter Spülflüssigkeit statt, etwa im Spülprogrammabschnitt REINIGEN und/oder im Spülprogrammabschnitt KLARSPÜLEN. Insbesondere weist innerhalb des erfindungsgemäßen Spülprogramms vorzugsweise jeder Spülprogrammabschnitt mit erwärmter Spülflüssigkeit jeweils eine Impulsspülphase auf.

Die Impulsspülphase erstreckt sich gemäß einem weiteren Ausführungsbeispiel der Erfindung über einen überwiegenden Teil, also über mehr als 50% eines Spülprogrammabschnitts, insbesondere des Spülprogrammabschnitts REINIGEN und/oder des Spülprogrammabschnitts KLARSPÜLEN. Die Impulsspülphase hat somit eine beträchtliche Dauer und daher einen großen Einfluss auf die Reinigungsleistung.

Besonders vorgezogen ist es, wenn eine Impulsspülphase während der Haltezeit des Spülprogrammabschnitts REINIGEN und/oder wenn eine Impulsspülphase während der Haltezeit des Spülprogrammabschnitts KLARSPÜLEN vorgesehen ist, insbesondere wenn sich eine Impulsspülphase über die gesamte oder nahezu gesamte Haltezeit des Spülprogrammabschnitts REINIGEN und/oder wenn sich eine Impulsspülphase über die gesamte oder nahezu gesamte Haltezeit des Spülprogrammabschnitts KLARSPÜLEN erstreckt. In der Haltezeit ist der Schmutz bereits ausgiebig eingeweicht und kann dann besonders effektiv mit erhöhtem Druck abgelöst werden. Indem eine Impulsspülphase in der Haltezeit nicht aber in der Aufheizzeit vorgesehen ist, kann im Übrigen ein gängiger Heizungsdruckwächter eingesetzt werden, ohne zu riskieren, dass dieser durch die beim Impulsspülen auftretenden Druckdifferenzen auslöst.

Alternativ oder zusätzlich zu einer oder mehreren zu einem festen Zeitpunkt im Spülprogramm verankerten Impulsspülphasen kann auch vorgesehen sein, dass eine Impulsspülphase abhängig von einem erfassten Messsignal durchgeführt wird. Bei dem Messsignal kann es sich z.B. um das Signal einer Messung handeln, welches Aufschluss über die Verschmutzung der Spülflotte gibt, etwa das Messergebnis eines Trübungssensors. So kann etwa eine Impulsspülphase dann erfolgen, wenn die Spülflotte stark verschmutzt ist, und andernfalls unterbleiben. Für die Entscheidung, ob eine Impulsspülphase erfolgt, kann auch ein Messsignal zugrunde gelegt werden, welches eine Siebverschmutzung oder eine Verstopfung der Siebkombination sensiert, oder ein Messsignal, welches ein Druckabfall im System erkennt. Denkbar ist auch die Verwendung eines Messsignals, welches Aufschluss über die Stromaufnahme des Umwälzpumpenmotors gibt. Dadurch kann ein sogenanntes "Verschlucken" der Umwälzpumpe erkannt und gegebenenfalls, d.h. abhängig davon eine Impulsspülphase durchgeführt werden.

Im Spülprogramm wird in an sich bekannter Weise Wechselspültechnik eingesetzt. Insbesondere findet gemäß einem Ausführungsbeispiel der Erfindung während der Impulsspülphase ein Wechselspülen statt. Dabei wird Spülflüssigkeit zeitweilig lediglich zu einem ersten rotierenden Sprüharm oder einer ersten Gruppe von zumindest einen rotierenden Sprüharm aufweisenden Sprüheinrichtungen und zeitweilig lediglich zu einem zweiten rotierenden Sprüharm oder einer zweiten Gruppe von zumindest einen rotierenden Sprüharm aufweisenden Sprüheinrichtungen gefördert. Die Förderung der Spülflüssigkeit erfolgt mittels einer Umsteuereinrichtung abwechselnd zu dem ersten Sprüharm bzw. der ersten Gruppe von Sprüheinrichtungen und zu dem zweiten Sprüharm bzw. der zweiten Gruppe von Sprüheinrichtungen. Denkbar ist auch eine abwechselnde Förderung zu mehr als zwei Sprüharmen bzw. Gruppen von Sprüheinrichtungen. Durch das Wechselspülen kann bekanntermaßen die für einen ordnungsgemäßen Spülbetrieb erforderliche Mindestwassermenge gesenkt werden. Ein Umsteuern durch die Umsteuereinrichtung erfolgt vorzugsweise regelmäßig nach Umsteuerintervallen von20 bis 100, insbesondere 30 bis 60 Sekunden. Es ist aber auch denkbar, dass die Umsteuerintervalle abhängig vom gewählten Spülprogramm und/oder abhängig vom jeweiligen Spülprogrammabschnitt sich unterscheiden und/oder abhängig von Messsignalen innerhalb eines Spülprogramms verändert werden. Das Verfahren ist insgesamt so ausgelegt, dass innerhalb eines Umsteuerintervalls jeweils mehrere Impulsbetriebsabschnitte, mehrere Normalbetriebsabschnitte und mehrere Abbremsabschnitte durchlaufen werden.

Gemäß einem vorgezogenen Ausführungsbeispiel der Erfindung wird die Drehzahl der Umwälzpumpe für den Umsteuervorgang auf eine gegenüber der Nenndrehzahl abgesenkte Drehzahl abgebremst. Dadurch wird ein Druckeinbruch während des Umsteuerns vermieden.

Die Umwälzpumpe des Spülautomaten ist über eine Steuereinrichtung ansteuerbar und in ihrer Drehzahl variabel einstellbar. Dabei ist sie so ausgebildet, dass eine besonders hohe Beschleunigung, d.h. ein besonders schneller Anstieg der Drehzahl, einstellbar ist, insbesondere wird eine Beschleunigung von über 5000 U/min pro Sekunde eingestellt, vorzugsweise eine Beschleunigung von über 8000 U/min pro Sekunde, wobei "U" für Umdrehungen des Laufrads der Umwälzpumpe steht. Dadurch kann schnell zwischen den drei Drehzahlniveaus gewechselt werden. Insbesondere kann schnell von der abgesenkten Drehzahl eines Abbremsabschnitts auf die gewünschte erhöhte Drehzahl im Impulsbetriebsabschnitt gewechselt werden, wodurch die Umwälzpumpe im Impulsbetriebsabschnitt für einen vergleichsweise langen Zeitraum im Wesentlichen mit einer konstanten, gegenüber der Nenndrehzahl erhöhten Drehzahl betrieben wird, was eine hohe Reinigungsleistung ermöglicht. Anders ausgedrückt ist die Beschleunigungsphase, in der die Drehzahl von der abgesenkten Drehzahl eines Abbremsabschnitts auf die erhöhte Drehzahl im Impulsbetriebsabschnitt gesteigert wird, kurz gegenüber der nachfolgenden Konstantphase, in der die Umwälzpumpe mit der konstanten, erhöhten Drehzahl betrieben wird.

Vorzugsweise erfolgt die Abbremsung, also der Wechsel von der erhöhten Drehzahl im Impulsbetriebsabschnitt zurück zu der Nenndrehzahl, und/oder die Abbremsung, also der Wechsel von der Nenndrehzahl zu der abgesenkten Drehzahl eines Abbremsabschnitts mit einem geringeren Betrag als die vorgehend beschriebene Beschleunigung, d.h. der Wechsel von der abgesenkten Drehzahl eines Abbremsabschnitts zu der erhöhten Drehzahl im Impulsbetriebsabschnitt. Insbesondere erfolgt die Abbremsung mit einer negativen Beschleunigung von unter 5000 U/min pro Sekunde, vorzugsweise von 2500 bis 3500 U/min pro Sekunde. Durch das vergleichsweise sanftere Absenken der Drehzahl kann die Nenndrehzahl bzw. die abgesenkte Drehzahl eines Abbremsabschnitts genauer eingestellt und ein Druckabfall unter das jeweilige Druckniveau vermieden werden.

Durch das erfindungsgemäße Verfahren kann insgesamt gegenüber Verfahren, die permanent mit einer vergleichsweise hohen Drehzahl betrieben werden, Energie gespart werden. Außerdem genügt für das Verfahren eine geringere Menge an Spülflüssigkeit aus. Durch die erfindungsgemäße große Bemessung der Zeitdauer der Impulsbetriebsabschnitte wird gleichzeitig erreicht, dass eine vergleichbare Reinigungsleistung erzielt wird. Darüber hinaus wird der Wasserspiegel im Bereich des Flächensiebs beständig in Bewegung gehalten, wodurch Schmutz sich weniger leicht festsetzt und besser abtransportiert wird. Auch im Bereich des Mikrofilters führt die durch die Drehzahländerungen hervorgerufene Strömungsbewegung zu einem besseren Schmutztransport, der ein Zusetzen des Mikrofilters verhindert. Im Übrigen wird durch das Pulsieren des Wasserdrucks der Bildung von Ablagerungen im Sprühsystem entgegengewirkt. Außerdem führt das Verfahren gegenüber Verfahren, die permanent mit einer vergleichsweise hohen Drehzahl betrieben werden, insgesamt zu einer geringeren akustischen Belastung.

Ausführungsbeispiele der Erfindung sind in den Zeichnungen rein schematisch dargestellt und werden nachfolgend näher beschrieben. Es zeigt
- Figur 1: eine schematische Darstellung des Drehzahlverlaufs der Umwälzpumpe während eines kurzen Zeitabschnitts innerhalb des Spülprogramms gemäß einem ersten Ausführungsbeispiel des erfindungsgemäßen Verfahrens,
- Figur 2: eine schematische Darstellung eines Drehzahlverlaufs der Umwälzpumpe entsprechend Fig. 1 während eines etwas längeren Zeitabschnitts innerhalb des Spülprogramms gemäß dem ersten Ausführungsbeispiel des erfindungsgemäßen Verfahrens
- Figur 3: eine schematische Darstellung eines Drehzahlverlaufs der Umwälzpumpe entsprechend Fig. 1 und 2 während eines noch längeren Zeitabschnitts innerhalb des Spülprogramms gemäß dem ersten Ausführungsbeispiel des erfindungsgemäßen Verfahrens
- Figur 4: eine schematische Darstellung des Drehzahlverlaufs der Umwälzpumpe während eines kurzen Zeitabschnitts innerhalb des Spülprogramms gemäß einem zweiten Ausführungsbeispiel des erfindungsgemäßen Verfahrens,
- Figur 5: eine schematische Darstellung eines Drehzahlverlaufs der Umwälzpumpe entsprechend Fig. 4 während eines etwas längeren Zeitabschnitts innerhalb des Spülprogramms gemäß dem zweiten Ausführungsbeispiel des erfindungsgemäßen Verfahrens
- Figur 6: eine schematische Darstellung eines Drehzahlverlaufs der Umwälzpumpe entsprechend Fig. 4 und 5 während eines noch längeren Zeitabschnitts innerhalb des Spülprogramms gemäß dem zweiten Ausführungsbeispiel des erfindungsgemäßen Verfahrens

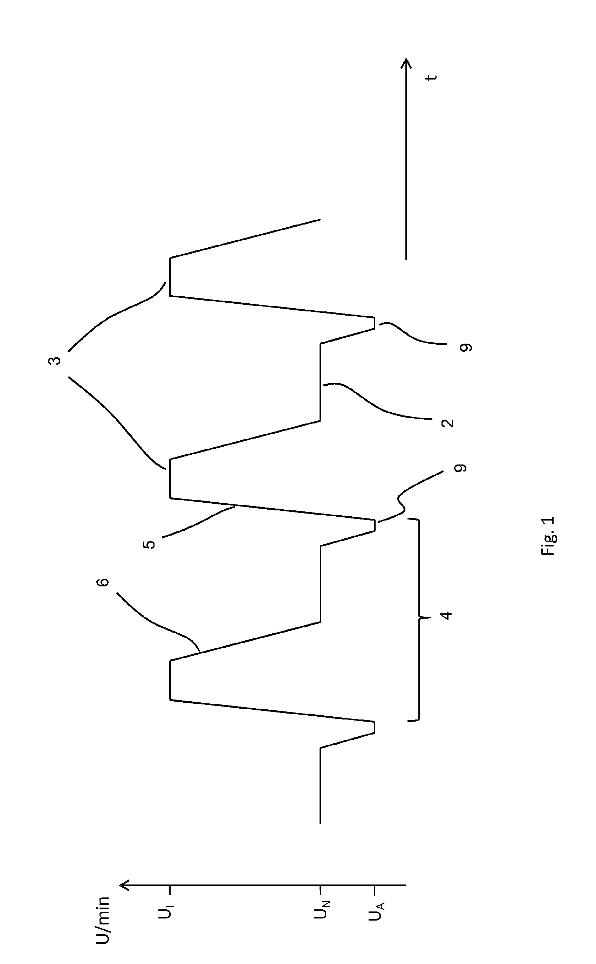

Fig. 1 zeigt eine schematische und nicht maßstabsgetreue Darstellung des Drehzahlverlaufs der Umwälzpumpe während eines kurzen Zeitabschnitts innerhalb einer Impulsspülphase (1), die während des Spülprogramms gemäß dem erfindungsgemäßen Verfahren durchgeführt wird. Darin wechseln sich Normalbetriebsabschnitte (2) in denen die Umwälzpumpe mit einer vorgegebenen oder vorgebbaren Nenndrehzahl (U_{N}) betrieben wird, mit Impulsbetriebsabschnitten (3), in denen die Umwälzpumpe mit einer gegenüber der Nenndrehzahl (U_{N}) erhöhten Drehzahl (U_{I}) betrieben wird, mehrfach ab, wobei die Umwälzpumpe kontinuierlich betrieben wird und insbesondere eingeschaltet bleibt. Der mehrfache Wechsel geschieht vorzugsweise periodisch mit einer Periodendauer (4) von 7 Sekunden. Dabei folgt im Anschluss an einen Normalbetriebsabschnitt (2) ein kurzer, etwa 1 bis 3 Sekunden langer Abbremsabschnitt (9), in dem die Drehzahl der Umwälzpumpe ausgehend von der Nenndrehzahl (U_{N}), welche vorzugsweise ca. 3000U/min beträgt, zunächst auf eine gegenüber der Nenndrehzahl (U_{N}) um ca. 10% abgesenkte Drehzahl (U_{A}) abgesenkt wird. Anschließend wird die Drehzahl durch hohe Beschleunigung der Umwälzpumpe auf die gegenüber der Nenndrehzahl (U_{N}) erhöhte Drehzahl (U_{I}) des Impulsbetriebsabschnittes (3) gehoben. Diese beträgt vorzugsweise während eines Reinigungsprogrammabschnittes ca. 3700U/min und während eines

Klarspülprogrammabschnittes 3500U/min. Durch die hohe Beschleunigung ΔU/Δt von vorzugsweise ca. 10000 U/min pro Sekunde ist die Beschleunigungsphase (5), in der die Drehzahl von der gegenüber der Nenndrehzahl (U_{N}) abgesenkten Drehzahl (U_{A}) auf die erhöhte Drehzahl (U_{I}) des Impulsbetriebsabschnittes (3) ansteigt, nur sehr kurz. Die erhöhte Drehzahl (U_{I}) wird über eine vergleichsweise lange Zeitdauer weitgehend konstant gehalten, bevor die Umwälzpumpe abgebremst wird und ihre Drehzahl zurück auf die Nenndrehzahl (U_{N}) abgesenkt wird. Dabei ist die Zeitdauer von Impulsbetriebsabschnitten (3) so lang, dass der Sprüharm in einem Impulsbetriebsabschnitt (3) zumindest eine volle Umdrehung ausführt. An der gesamten Periodendauer (4) hat die Zeitdauer eines Impulsbetriebsabschnitts (3) einen großen Anteil von 35 bis 40%. Das Abbremsen von der erhöhten Drehzahl (U_{I}) des Impulsbetriebsabschnittes (3) auf die Nenndrehzahl (U_{N}) innerhalb der Abbremsphase (6) geschieht vorzugsweise mit einer negativen Beschleunigung ΔU/Δt mit einem Betrag von ca. 3000 U/min pro Sekunde. Das Abbremsen erfolgt somit ebenfalls schnell, jedoch wesentlich sanfter als das Beschleunigen. Es findet somit innerhalb einer Impulsspülphase (1) ein periodischer Drehzahlwechsel statt, wobei in einer Periode stets zwischen drei verschiedenen Drehzahlniveaus (U_{N}, U_{A}, U_{I}) gewechselt wird.

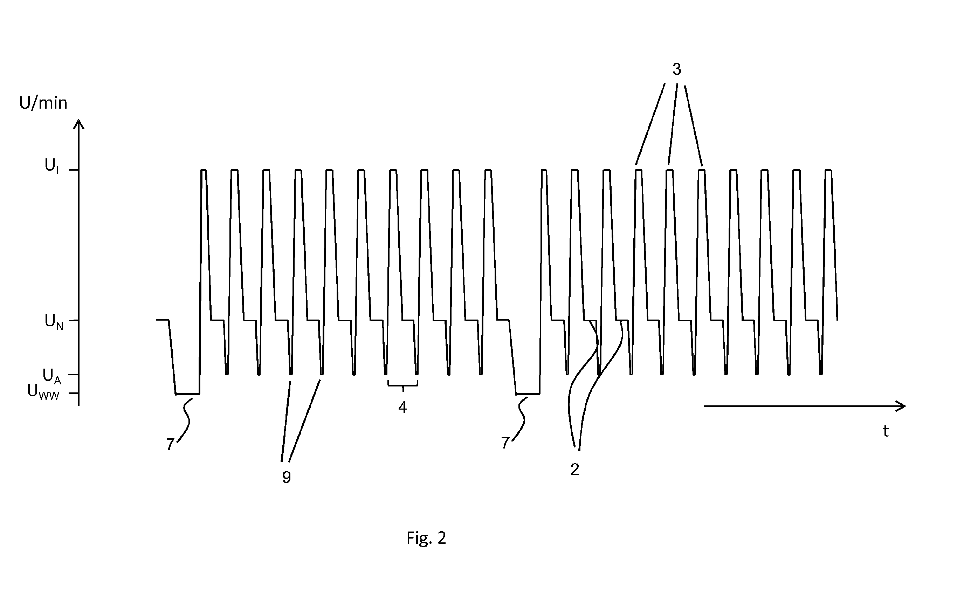

Fig. 2 zeigt eine schematische und nicht maßstabsgetreue Darstellung des Drehzahlverlaufs der Umwälzpumpe entsprechend Fig. 1, allerdings betrachtet über einen längeren Zeitabschnitt als in Fig. 1. In dem erfindungsgemäßen Verfahren findet dabei ein Wechselspülen statt, bei dem eine Umsteuereinrichtung, d.h. eine sogenannte Wasserweiche die Spülflüssigkeit abwechselnd entweder zu einem unteren Sprüharm oder aber zu einem oberen Sprüharm leitet. Es kann darüber hinaus ein dritter, noch oberhalb des oberen Sprüharms angeordneter Top-Sprüharm vorhanden sein, welcher typischerweise gleichzeitig mit dem unteren Sprüharm durch die Wasserweiche mit Spülflüssigkeit versorgt wird. Ein Umsteuern durch die Wasserweiche erfolgt abhängig vom gewählten Spülprogramm und/oder vom Spülprogrammabschnitt typischerweise alle 30 Sekunden bzw. alle 60 Sekunden. Ein derartiges Wechselspülen findet insbesondere auch während der Impulsspülphase (1) statt, wie in Fig. 2 angedeutet. Das Umsteuern der Wasserweiche erfolgt dabei bei gegenüber der Nenndrehzahl (U_{N}) abgesenkter Drehzahl (U_{WW}) der Umwälzpumpe, diese liegt ca. 10% unter der Nenndrehzahl (U_{N}), also bei etwa 2700U/min. Das Abwechseln von Normalbetriebsabschnitten (2), Abbremsabschnitten (9) und Impulsbetriebsabschnitten (3) wird somit periodisch von Umsteuerabschnitten (7) unterbrochen, in denen die Umwälzpumpe auf eine gegenüber der Nenndrehzahl (U_{N}) abgesenkte Drehzahl (U_{WW}) abgebremst wird. Zwischen zwei Umsteuervorgängen, also zwischen zwei Umsteuerabschnitten (7) werden dabei jeweils mehrere Normalbetriebsabschnitte (2), Abbremsabschnitte (9) und Impulsbetriebsabschnitte (3) durchlaufen.

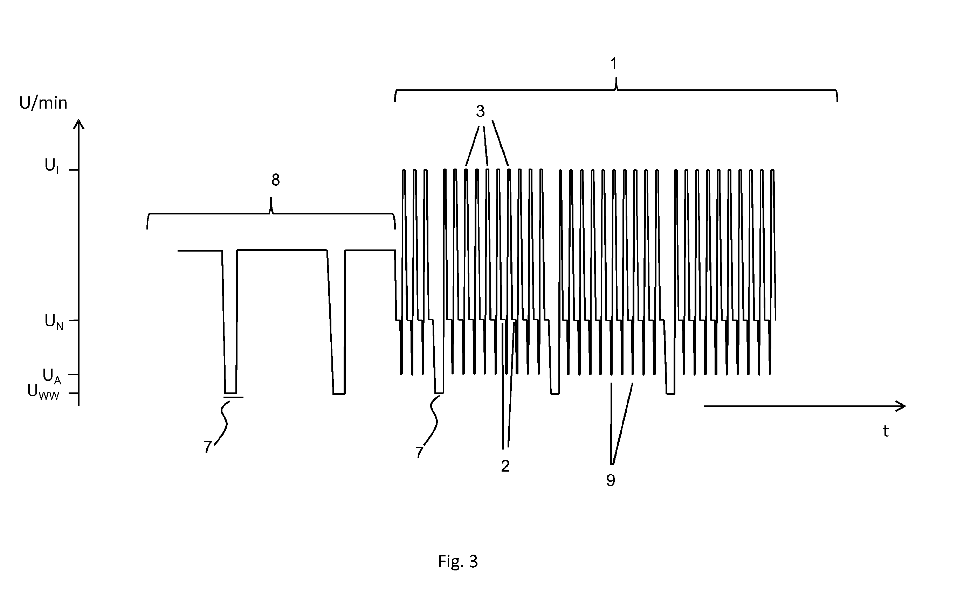

Fig. 3 zeigt eine schematische und nicht maßstabsgetreue Darstellung des Drehzahlverlaufs der Umwälzpumpe entsprechend Fig. 1 und 2, allerdings betrachtet über einen noch längeren Zeitabschnitt als in Fig. 2. Zu erkennen ist insbesondere ein Wechsel von einer Normalspülphase (8) zur Impulsspülphase (1). In der Normalspülphase (8) wird die Umwälzpumpe mit einer außerhalb der Umsteuerabschnitte (7) konstanten Drehzahl (U₀) betrieben, welche zwischen der Nenndrehzahl (U_{N}) und der erhöhten Drehzahl (U_{I}) der Impulsspülphase liegt. Das periodische Umsteuern durch die Wasserweiche findet sowohl in der Normalspülphase (8) als auch in der Impulsspülphase (1) statt und wird durch den Wechsel von der Normalspülphase (8) zur Impulsspülphase (1) nicht beeinflusst.

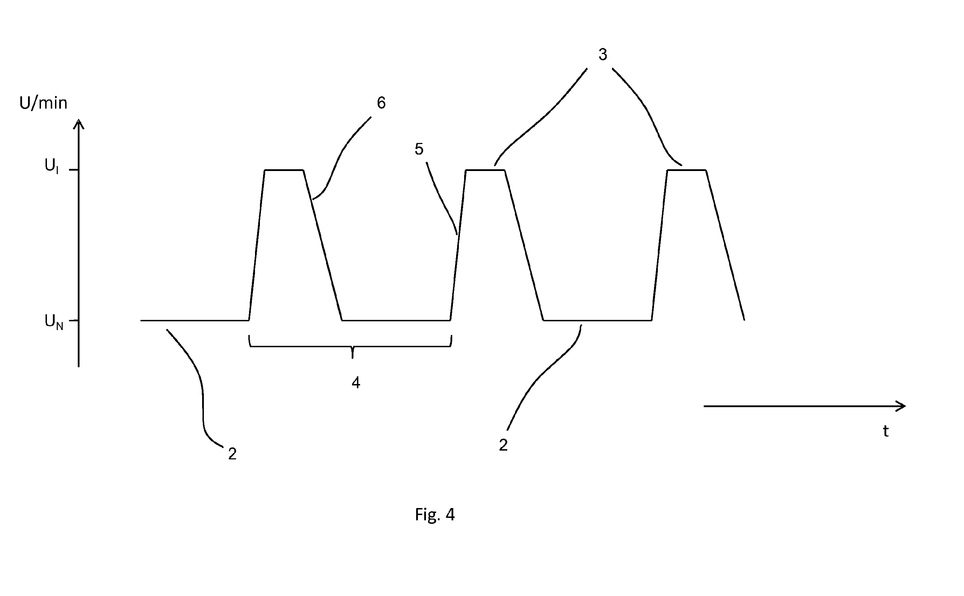

Fig. 4 zeigt eine schematische und nicht maßstabsgetreue Darstellung des Drehzahlverlaufs der Umwälzpumpe während eines kurzen Zeitabschnitts innerhalb einer Impulsspülphase (1), die während des Spülprogramms gemäß einem zweiten Ausführungsbeispiel des erfindungsgemäßen Verfahrens durchgeführt wird. Darin wechseln sich Normalbetriebsabschnitte (2) in denen die Umwälzpumpe mit einer vorgegebenen oder vorgebbaren Nenndrehzahl (U_{N}) betrieben wird, mit Impulsbetriebsabschnitten (3), in denen die Umwälzpumpe mit einer gegenüber der Nenndrehzahl (U_{N}) erhöhten Drehzahl (U_{I}) betrieben wird, mehrfach ab, wobei die Umwälzpumpe kontinuierlich betrieben wird und insbesondere eingeschaltet bleibt. Der mehrfache Wechsel geschieht vorzugsweise periodisch mit einer Periodendauer (4) von 4 Sekunden. Dabei wird am Ende eines Normalbetriebsabschnittes (2) die Drehzahl der Umwälzpumpe ausgehend von der Nenndrehzahl (U_{N}), welche vorzugsweise ca. 3000U/min beträgt, durch hohe Beschleunigung der Umwälzpumpe auf die gegenüber der Nenndrehzahl (U_{N}) erhöhte Drehzahl (U_{I}) des Impulsbetriebsabschnittes (3) gehoben. Diese beträgt vorzugsweise während eines Reinigungsprogrammabschnittes ca. 3700U/min und während eines Klarspülprogrammabschnittes 3500U/min. Durch die hohe Beschleunigung ΔU/Δt von vorzugsweise ca. 10000 U/min pro Sekunde ist die Beschleunigungsphase (5), in der die Drehzahl von der der Nenndrehzahl (U_{N}) auf die erhöhte Drehzahl (U_{I}) des Impulsbetriebsabschnittes (3) ansteigt, nur sehr kurz. Die erhöhte Drehzahl (U_{I}) wird über eine vergleichsweise lange Zeitdauer weitgehend konstant gehalten, bevor die Umwälzpumpe abgebremst wird und ihre Drehzahl zurück auf die Nenndrehzahl (U_{N}) abgesenkt wird. Dabei ist die Zeitdauer von Impulsbetriebsabschnitten (3) zumindest so lang, dass der Sprüharm in einem Impulsbetriebsabschnitt (3) zumindest eine volle Umdrehung ausführt. An der gesamten Periodendauer (4) hat die Zeitdauer eines Impulsbetriebsabschnitts (3) einen großen Anteil von 35 bis 40%. Das Abbremsen von der erhöhten Drehzahl (U_{I}) des Impulsbetriebsabschnittes (3) auf die Nenndrehzahl (U_{N}) innerhalb der Abbremsphase (6) geschieht vorzugsweise mit einer negativen Beschleunigung ΔU/Δt mit einem Betrag von ca. 3000 U/min pro Sekunde. Das Abbremsen erfolgt somit ebenfalls schnell, jedoch wesentlich sanfter als das Beschleunigen.

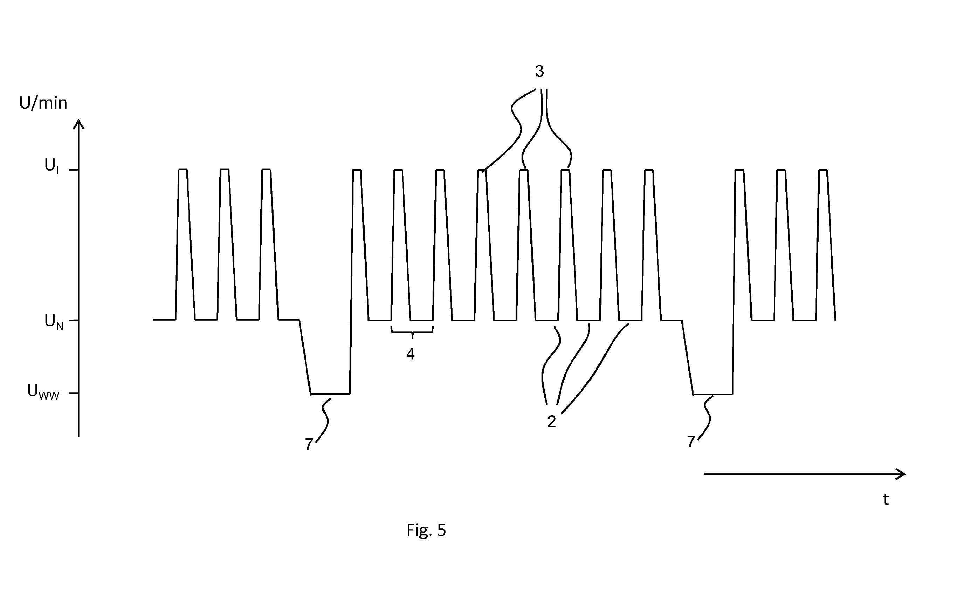

Fig. 5 zeigt eine schematische und nicht maßstabsgetreue Darstellung des Drehzahlverlaufs der Umwälzpumpe entsprechend Fig. 4, allerdings betrachtet über einen längeren Zeitabschnitt als in Fig. 4. In dem erfindungsgemäßen Verfahren findet dabei ein Wechselspülen statt, bei dem eine Umsteuereinrichtung, d.h. eine sogenannte Wasserweiche die Spülflüssigkeit abwechselnd entweder zu einem unteren Sprüharm oder aber zu einem oberen Sprüharm leitet. Es kann darüber hinaus ein dritter, noch oberhalb des oberen Sprüharms angeordneter Top-Sprüharm vorhanden sein, welcher typischerweise gleichzeitig mit dem unteren Sprüharm durch die Wasserweiche mit Spülflüssigkeit versorgt wird. Ein Umsteuern durch die Wasserweiche erfolgt abhängig vom gewählten Spülprogramm und/oder vom Spülprogrammabschnitt typischerweise alle 30 Sekunden bzw. alle 60 Sekunden. Ein derartiges Wechselspülen findet insbesondere auch während der Impulsspülphase (1) statt, wie in Fig. 5 angedeutet. Das Umsteuern der Wasserweiche erfolgt dabei bei gegenüber der Nenndrehzahl (U_{N}) abgesenkter Drehzahl (U_{WW}) der Umwälzpumpe, diese liegt ca. 10% unter der Nenndrehzahl (U_{N}), also bei etwa 2700U/min. Das Abwechseln von Normalbetriebsabschnitten (2) und Impulsbetriebsabschnitten (3) wird somit periodisch von Umsteuerabschnitten (7) unterbrochen, in denen die Umwälzpumpe auf eine gegenüber der Nenndrehzahl (U_{N}) abgesenkte Drehzahl (U_{WW}) abgebremst wird. Zwischen zwei Umsteuervorgängen, also zwischen zwei Umsteuerabschnitten (7) werden dabei jeweils mehrere Normalbetriebsabschnitte (2) und Impulsbetriebsabschnitte (3) durchlaufen.

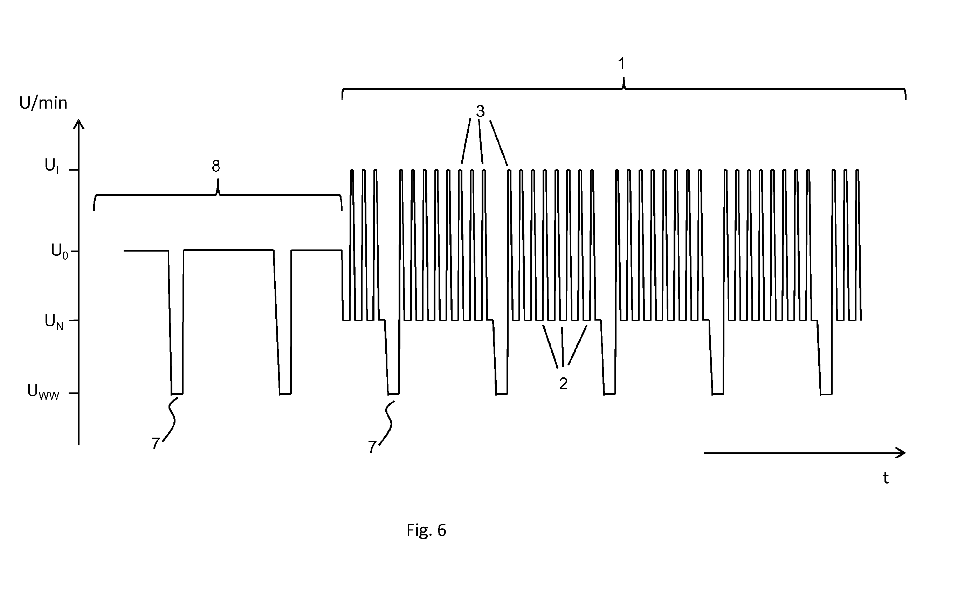

Fig. 6 zeigt eine schematische und nicht maßstabsgetreue Darstellung des Drehzahlverlaufs der Umwälzpumpe entsprechend Fig. 4 und 5, allerdings betrachtet über einen noch längeren Zeitabschnitt als in Fig. 5. Zu erkennen ist insbesondere ein Wechsel von einer Normalspülphase (8) zur Impulsspülphase (1). In der Normalspülphase wird die Umwälzpumpe mit einer außerhalb der Umsteuerabschnitte (7) konstanten Drehzahl (U₀) betrieben, welche zwischen der Nenndrehzahl (U_{N}) und der erhöhten Drehzahl (U_{I}) der Impulsspülphase liegt. Das periodische Umsteuern durch die Wasserweiche findet sowohl in der Normalspülphase (8) als auch in der Impulsspülphase (1) statt und wird durch den Wechsel von der Normalspülphase (8) zur Impulsspülphase (1) nicht beeinflusst.

## Patentansprüche

1. Verfahren zur Durchführung eines Spülprogramms in einem Spülautomaten, bei dem eine Umwälzpumpe Spülflüssigkeit zu mindestens einem rotierenden Sprüharm fördert, mittels dem das zu reinigende Spülgut mit der Spülflüssigkeit beaufschlagt wird, wobei das Spülprogramm eine Impulsspülphase (1) aufweist, in der sich Normalbetriebsabschnitte (2), in denen die Umwälzpumpe mit einer Nenndrehzahl (U_{N}) betrieben wird, mit Impulsbetriebsabschnitten (3), in denen die Umwälzpumpe mit einer gegenüber der Nenndrehzahl (U_{N}) erhöhten Drehzahl (U_{I}) betrieben wird, mehrfach abwechseln,
**dadurch gekennzeichnet,**
**dass** die Zeitdauer von Impulsbetriebsabschnitten (3) jeweils so bemessen ist, dass der Sprüharm in einem Impulsbetriebsabschnitt (3) zumindest eine volle Umdrehung ausführt, bevor die Drehzahl wieder auf die Nenndrehzahl (U_{N}) abgesenkt wird.

2. Verfahren zur Durchführung eines Spülprogramms nach Anspruch 1,
**dadurch gekennzeichnet,**
**dass** die Impulsbetriebsabschnitte (3) an der Impulsspülphase (1) einen zeitlichen Anteil von 25 bis 50 %, vorzugsweise von 35 bis 40 % aufweisen.

3. Verfahren zur Durchführung eines Spülprogramms nach mindestens einem der vorgenannten Ansprüche,
**dadurch gekennzeichnet,**
**dass** die Drehzahl (U_{I}) der Umwälzpumpe in Impulsbetriebsabschnitten (3) gegenüber der Nenndrehzahl (U_{N}) um 10 bis 35% erhöht ist.

4. Verfahren zur Durchführung eines Spülprogramms nach mindestens einem der vorgenannten Ansprüche,
**dadurch gekennzeichnet,**
**dass** das Abwechseln von Normalbetriebsabschnitten (2) und Impulsbetriebsabschnitten (3) periodisch erfolgt mit einer Periodendauer zwischen 3 und 10 Sekunden, vorzugsweise zwischen 4 und 8 Sekunden.

5. Verfahren zur Durchführung eines Spülprogramms nach mindestens einem der vorgenannten Ansprüche,
**dadurch gekennzeichnet,**
**dass** das Spülprogramm eine Impulsspülphase (1) im Programmabschnitt REINIGEN und/oder im Programmabschnitt KLARSPÜLEN aufweist.

6. Verfahren zur Durchführung eines Spülprogramms nach mindestens einem der vorgenannten Ansprüche,
**dadurch gekennzeichnet,**
**dass** das Spülprogramm einen Programmabschnitt aufweist, der eine Aufheizzeit, in der Spülflüssigkeit von einer Heizeinrichtung erwärmt wird, und eine auf die Aufheizzeit nach Abschaltung der Heizeinrichtung folgende Haltezeit, in der der Spülbetrieb bei abgeschalteter Heizeinrichtung fortgesetzt wird, umfasst, wobei eine Impulsspülphase (1) während der Haltezeit vorgesehen ist und sich vorzugsweise zumindest über einen überwiegenden Teil der Haltezeit, besonders vorgezogen über die gesamte Haltezeit erstreckt.

7. Verfahren zur Durchführung eines Spülprogramms nach mindestens einem der vorgenannten Ansprüche,
**dadurch gekennzeichnet,**
**dass** während der Impulsspülphase (1) ein Wechselspülen stattfindet, wobei Spülflüssigkeit zeitweilig lediglich zu einem ersten rotierenden Sprüharm oder einer ersten Gruppe von zumindest einen rotierenden Sprüharm aufweisenden Sprüheinrichtungen und zeitweilig lediglich zu einem zweiten rotierenden Sprüharm oder einer zweiten Gruppe von zumindest einen rotierenden Sprüharm aufweisenden Sprüheinrichtungen gefördert wird.

8. Verfahren zur Durchführung eines Spülprogramms nach mindestens einem der vorgenannten Ansprüche,
**dadurch gekennzeichnet,**
**dass** die Drehzahl der Umwälzpumpe im Anschluss an einen Normalbetriebsabschnitt (2) zunächst auf eine gegenüber der Nenndrehzahl (U_{N}) abgesenkte Drehzahl (U_{A}) abgesenkt wird, bevor sie auf die erhöhte Drehzahl (U_{I}) des Impulsbetriebsabschnitts (3) angehoben wird.

## Claims

1. Method for carrying out a rinsing program in an automatic rinsing machine, in which a circulating pump conveys rinsing fluid to at least one rotating spray arm by means of which the rinsing fluid is applied to the washware to be cleaned, the rinsing program having a pulse rinsing phase (1) in which normal operating portions (2), in which the circulating pump is operated at a nominal rotational speed (U_{N}), alternate multiple times with pulse operating portions (3), in which the circulating pump is operated at a rotational speed (U_{I}) that is higher than the nominal rotational speed (U_{N}), **characterised in that** the duration of pulse operating portions (3) is measured in each case such that the spray arm carries out at least one full rotation in a pulse operating portion (3) before the rotational speed is lowered again to the nominal rotational speed (U_{N}).

2. Method for carrying out a rinsing program according to claim 1, **characterised in that** the pulse operating portions (3) in the pulse rinsing phase (1) take up a proportion of time of 25 to 50 %, preferably 35 to 40 %.

3. Method for carrying out a rinsing program according to at least one of the preceding claims, **characterised in that** the rotational speed (U_{I}) of the circulating pump is increased in pulse operating portions (3) by 10 to 35 % in comparison with the nominal rotational speed (U_{N}).

4. Method for carrying out a rinsing program according to at least one of the preceding claims, **characterised in that** the alternation between normal operating portions (2) and pulse operating portions (3) occurs periodically, with a period duration of between 3 and 10 seconds, preferably between 4 and 8 seconds.

5. Method for carrying out a rinsing program according to at least one of the preceding claims, **characterised in that** the rinsing program has a pulse rinsing phase (1) in the program portion CLEAN and/or in the program portion CLEAR RINSE.

6. Method for carrying out a rinsing program according to at least one of the preceding claims, **characterised in that** the rinsing program has a program portion which includes a heating time, in which the rinsing fluid is heated by a heating device, and a holding time which follows the heating time after the heating device has been switched off and in which the rinsing operation is continued while the heating device is switched off, a pulse rinsing phase (1) being scheduled during the holding time and preferably spanning at least the majority of the holding time, particularly preferably spanning the entire holding time.

7. Method for carrying out a rinsing program according to at least one of the preceding claims, **characterised in that** alternating rinsing takes place during the pulse rinsing phase (1), the rinsing fluid at times only being conveyed to a first rotating spray arm or a first group of spray devices having at least one rotating spray arm, and at times only being conveyed to a second rotating spray arm or a second group of spray devices having at least one rotating spray arm.

8. Method for carrying out a rinsing program according to at least one of the preceding claims, **characterised in that** the rotational speed of the circulating pump following a normal operating portion (2) is first decreased to a rotational speed (U_{A}) that is lower than the nominal rotational speed (U_{N}) before being raised to the increased rotational speed (U_{I}) of the pulse operating portion (3).

## Revendications

1. Procédé de réalisation d'un programme de lavage dans un appareil de lavage automatique, dans lequel une pompe de circulation transporte du liquide de lavage à au moins un bras de pulvérisation rotatif au moyen duquel le produit à nettoyer est exposé au liquide de lavage, dans lequel le programme de lavage présente une phase de lavage par impulsion (1), dans laquelle des segments de fonctionnement normal (2) dans lesquels la pompe de circulation est mise en marche à une vitesse de rotation nominale (U_{N}) alternent à plusieurs reprises avec des segments de fonctionnement par impulsion (3) dans lesquels la pompe de circulation est mise en marche à une vitesse de rotation accrue (U_{I}) par rapport à la vitesse de rotation nominale (U_{N}), **caractérisé en ce que** la durée de segments de fonctionnement par impulsion (3) est respectivement calculée de telle sorte que le bras de pulvérisation effectue, dans un segment de fonctionnement par impulsion (3), au moins une rotation complète avant que la vitesse de rotation soit de nouveau réduite jusqu'à la vitesse de rotation nominale (U_{N}).

2. Procédé de réalisation d'un programme de lavage selon la revendication 1, **caractérisé en ce que** les segments de fonctionnement par impulsion (3) présentent dans la phase de lavage par impulsion (1) une fraction temporelle de 25 à 50 %, de préférence de 35 à 40%.

3. Procédé de réalisation d'un programme de lavage selon au moins l'une des revendications précitées, **caractérisé en ce que** la vitesse de rotation (U_{I}) de la pompe de circulation dans des segments de fonctionnement par impulsion (3) est augmentée de 10 à 35 % par rapport à la vitesse de rotation nominale (U_{N}).

4. Procédé de réalisation d'un programme de lavage selon au moins l'une des revendications précitées, **caractérisé en ce que** l'alternance de segments de fonctionnement normal (2) et de segments de fonctionnement par impulsion (3) s'effectue périodiquement avec une durée de période comprise entre 3 et 10 secondes, de préférence entre 4 et 8 secondes.

5. Procédé de réalisation d'un programme de lavage selon au moins l'une des revendications précitées, **caractérisé en ce que** le programme de lavage présente une phase de lavage par impulsion (1) dans le segment de programme NETTOYAGE et/ou dans le segment de programme RINÇAGE.

6. Procédé de réalisation d'un programme de lavage selon au moins l'une des revendications précitées, **caractérisé en ce que** le programme de lavage présente un segment de programme qui comprend un temps de chauffe dans lequel du liquide de lavage est chauffé par un dispositif de chauffage, et un temps de maintien qui suit le temps de chauffe après l'arrêt du dispositif de chauffage et dans lequel le mode de lavage est poursuivi alors que le dispositif de chauffage est arrêté, une phase de lavage par impulsion (1) étant prévue pendant le temps de maintien et s'étendant de préférence au moins pendant une majeure partie du temps de maintien, de façon particulièrement préférée pendant tout le temps de maintien.

7. Procédé de réalisation d'un programme de lavage selon au moins l'une des revendications précitées, **caractérisé en ce que**, pendant la phase de lavage par impulsion (1), il se produit un lavage alterné, du liquide de lavage étant transporté temporairement seulement à un premier bras de pulvérisation rotatif ou à un premier groupe de dispositifs de pulvérisation présentant au moins un bras de pulvérisation rotatif, et temporairement seulement à un deuxième bras de pulvérisation rotatif ou à un deuxième groupe de dispositifs de pulvérisation présentant au moins un bras de pulvérisation rotatif.

8. Procédé de réalisation d'un programme de lavage selon au moins l'une des revendications précitées, **caractérisé en ce que**, à la suite d'un segment de fonctionnement normal (2), la vitesse de rotation de la pompe de circulation est d'abord abaissée à une vitesse de rotation réduite (U_{A}) par rapport à la vitesse de rotation nominale (U_{N}) avant d'être augmentée jusqu'à la vitesse de rotation accrue (U_{I}) du segment de fonctionnement par impulsion (3).
